# EUROPÄISCHE PATENTSCHRIFT

(11) **EP 2 535 237 B1**
(45) Veröffentlichungstag und Bekanntmachung des Hinweises auf die Patenterteilung: **03.06.2015**
(21) Anmeldenummer: 11169783.5
(22) Anmeldetag: 14.06.2011
(51) Int. Cl.: B61G 11/12, F16F 9/34

(54) **Vorrichtung zum Abdämpfen von Druckkräften**
Device for dampening forces of compression
Dispositif d'amortissement des forces de compression

(43) Veröffentlichungstag der Anmeldung: 19.12.2012
(73) Patentinhaber: Voith Patent GmbH, 89522 Heidenheim (DE)
(72) Erfinder: Mombour, Klaus, 47447 Moers (DE)
(74) Vertreter: Rupprecht, Kay

(56) Entgegenhaltungen:
- EP-A2- 2 065 287
- DE-A1- 19 523 467

## Beschreibung

Die vorliegende Erfindung betrifft eine Vorrichtung zum Abdämpfen von Druckkräften in Form einer auch bei dynamischer Stoßbelastung reversibel ausgestalteten Stoßsicherung, entsprechend den Merkmalen des Oberbegriffes von Anspruch 1.

Die nächstliegende Druckschrift DE 195 23 467 A1 betrifft eine Hydraulikkapsel, insbesondere für

Eisenbahnpuffer, bestehend aus der Kombination eines hydraulischen Dämpfers und einer Gasfeder. Zwischen dem hydraulischen Dämpfer und der Gasfeder ist ein Multiplikatorventil angeordnet, das bei quasistatischen Beanspruchungen der Hydraulikkapsel die Widerstandskraft der Gasfeder erhöht. Parallel zum Multiplikatorventil ist ein Überdruckventil geschaltet, das bei quasistatischen Beanspruchungen geschlossen bleibt und bei dynamischen Beanspruchungen derart öffnet, dass die Funktion des Multiplikatorventils aufgehoben ist.

Die Druckschrift EP 2 065 287 A2 betrifft eine insbesondere für Schienenfahrzeuge vorgesehene Feder-Dämpfer-Einheit eines Druckstöße dämpfenden Stoßreduzierelements, wobei die Feder-Dämpfer-Einheit folgendes aufweist: einen Zylinder, einen darin längs der Längsachse verschiebbar geführten Kolben, einen durch den Zylinder und den Kolben begrenzten volumenveränderlichen hydraulischen Hochdruck-Arbeitsraum, einen volumenveränderlichen Niederdruck-Überströmraum, welcher mit dem Hochdruck-Arbeitsraum über eine kolbenstellungsabhängige Drossel verbunden ist, und eine Rückstellfeder. Dabei ist mindestens ein Vorspannventil vorgesehen und mit der kolbenstellungsabhängigen Drossel derart strömungstechnisch in Reihe geschaltet, dass sämtliche die kolbenstellungsabhängige Drossel vom Hochdruck-Arbeitsraum zum Niederdruck-Überströmraum durchströmende Hydraulikflüssigkeit auch mindestens ein Vorspannventil durchströmt. Das mindestens eine Vorspannventil öffnet dabei erst bei Erreichen bzw. Überschreiten einer vorgegebenen Mindestdruckdifferenz zwischen seiner dem Hochdruck-Arbeitsraum zugeordneten Hochdruckseite und seiner dem Niederdruck-Überströmraum zugeordneten Niederdruckseite.

Aus der Schienenfahrzeugtechnik ist es bekannt, zwischen den einzelnen Wagenkästen eines mehrgliedrigen Fahrzeuges Stoßsicherungen, z.B. in Gestalt von sogenannten Stoßfängern, einzusetzen. Diese Bauelemente sind derart konstruiert, dass sie im Falle eines Zusammenstoßens mit einem festen oder einem beweglichen Hindernis, beispielsweise einem weiteren Wagenkasten, Energie aufnehmen und dadurch Beschädigungen am Fahrzeug oder der Ladung verhindern sollen. Derartige Stoßfänger finden vor allem an Schienenfahrzeugen Verwendung, wobei meistens ein oder zwei an den Stirnseiten angebrachte Konstruktionsteile eingesetzt werden, die den Zweck haben, die auf das Schienenfahrzeug in dessen Längsrichtung von außen einwirkenden waagerechten Druckkräfte aufzunehmen.

Hierbei kommen im Wesentlichen zwei Arten von Stoßfängern an Schienenfahrzeugen zum Einsatz. Sogenannte Zentralpuffer stellen eine Stoßsicherung dar, welche in der Längsachse des Fahrzeuges angeordnet ist, so dass sich an jeder Stirnseite des Schienenfahrzeuges nur ein Puffer in der Mitte der Kopfschwelle befindet. Weiterhin sind sogenannte Seitenpuffer bekannt, bei welchen sich jeweils zwei Puffer an der Stirnseite des Schienenfahrzeuges befinden.

Aus der Schienfahrzeugtechnik ist bekannt, beispielsweise bei einem mehrgliedrigen Schienenfahrzeug die einzelnen Wagenkästen mit Seitenpuffern ("UIC-Puffern") auszurüsten, wenn die Wagenkästen nicht über ein Drehgestell miteinander verbunden sind und somit im Fahrbetrieb der Abstand zweier miteinander gekoppelter Wagenkästen variieren kann. Derartige Seitenpuffer dienen dazu, die im normalen Fahrbetrieb beispielsweise beim Abbremsen auftretenden Stöße aufzunehmen und abzudämpfen.

Um sowohl ein gutes Einfederverhalten des Puffers bei quasistatischem Einfedern als auch bei dynamischer Beanspruchung zu erreichen, ist es bekannt, sogenannte gashydraulische Dämpfungseinrichtungen einzusetzen, welche aus einer Kombination einer Gasdruckfeder mit einem hydraulischen Überströmsystem bestehen. Bei statischem bzw. quasistatischem Einfedern eines solchen herkömmlichen gashydraulischen Puffers wird Füllgas, in der Regel Stickstoff, innerhalb des Gasdruckfederteils des Puffers komprimiert und erzeugt so eine Gegenkraft auf den Pufferteller. Bei Nachlassen der von außen auf den Puffer einwirkenden Kraft bewirkt die Gasfeder somit durch anschließende Expansion des Füllgases den sogenannten Rückhub, also Wiederausfedern des Puffers.

Bei dynamischer Beanspruchung eines solchen herkömmlichen gashydraulischen Dämpfers sorgt zusätzlich durch einen Drosselspalt strömendes Hydrauliköl bzw. anderweitige Hydraulikflüssigkeit dafür, dass durch den während des Strömungsvorganges auftretenden Druckabfall über dem Drosselspalt eine einer dynamischen Kraftkurve folgende hydraulische Gegenkraft erzeugt wird, welche gegen die die Einfederung bewirkende Stoßkraft wirkt.

Bei derartigen gashydraulischen Dämpferkombinationen ist es wünschenswert, ein Überströmen der Hydraulikflüssigkeit über den Drosselspalt gegen den Druck der Gasfeder erst dann zu erlauben, wenn eine gewisse Mindestkraft beim Einfedern überschritten ist, um den Anteil der Gasfeder an der Gesamtfederung vor allem im statischen Belastungsfall nicht zu schmälern.

Es ist daher bekannt, sogenannte Multiplikatorventile vorzusehen, welche derart angeordnet sind, dass auf die größere Wirkfläche des Multiplikatorventils ("Multiplikatorfläche") direkt oder indirekt der in dem Gasraum der Gasdruckfeder herrschende Druck einwirkt und ein solches Multiplikatorventil durch diesen direkt oder indirekt wirkenden Gasdruck in seinen Ventilsitz gepresst wird. Die kleinere Wirkfläche des Multiplikatorventils, d.h. auf der entgegengesetzten Seite, steht dann in Wirkverbindung mit dem Hydraulikanteil des herkömmlichen gashydraulischen Dämpfers. Erst wenn - beispielsweise in Folge einer quasi statischen Einfederung des Puffers durch einen Stoß - der Druck in der Hydraulikflüssigkeit ein Vielfaches, beispielsweise das Fünffache des Gasdruckes beträgt, ist dieser hohe Druck im Stande, durch Einwirken auf die kleine Wirkfläche des Multiplikatorventils dieses soweit aus seinem Sitz zu verschieben, dass ein Durchlassspalt freigegeben wird, durch welchen die Hydraulikflüssigkeit beispielsweise in ein Hydraulikreservoir einströmen kann. Durch den Einsatz eines solchen Multiplikatorventils wird also insbesondere erreicht, dass der Gasdruck im Gasraum der Gasdruckfeder bei vollständig ausgefedertem Puffer relativ niedrig gehalten werden kann. Dadurch ist es möglich, eine günstige statische Kennlinie des Gasdruckfederanteils der gashydraulischen Dämpfungsvorrichtung zu erhalten.

Die Kombination einer hydraulischen Drosseleinrichtung beispielsweise in Form eines Drosseldorns mit einem solchen Multiplikatorventil führt bei den bekannten Pufferanordnungen jedoch zu einer verhältnismäßig voluminösen Bauform, da der Drosseldorn auf einer Mittenachse des Pufferzylinders angeordnet wird und das Multiplikatorventil den Überströmbereich hinter dem Drosseldorn vollständig umgibt. Um eine dementsprechend große gasdruckfederseitige Wirkfläche aufweisen zu können, muss das Volumen des Multiplikatorventils somit deutlich größer sein als der Überströmbereich, in welchen die Hydraulikflüssigkeit aus der hinteren Hydraulikkammer über den vom Drosseldorn gebildeten Drosselspalt strömt.

Infolgedessen muss bei der herkömmlichen Vorrichtung ein Multiplikatorventil vorgesehen werden, welches durch sein großes Bauvolumen einen großen Materialaufwand erfordert und zudem schwierig zu konstruieren ist.

Demgemäß liegt der vorliegenden Erfindung die Aufgabe zugrunde, eine Vorrichtung anzugeben, welche die Kombination einer Drosseleinrichtung beispielsweise in Form eines Drosseldorns mit einem Multiplikatorventil ermöglicht, wobei das Multiplikatorventil klein, kostengünstig und leicht zu konstruieren ist.

Diese Aufgabe wird erfindungsgemäß durch eine Vorrichtung entsprechend den Merkmalen des unabhängigen Anspruchs 1 zum Abdämpfen von Druckkräften gelöst, welche eine in einem Endbereich eines Hohlkolbens ausgebildete Ventilanordnung mit einem Überströmbereich aufweist, wobei ein Multiplikatorventil vorgesehen ist, welches einen über mindestens einen Kanal mit dem Überströmbereich verbundenen exzentrisch angeordneten Hydraulikraum mit seiner hinteren Wirkfläche (Eingangsfläche) verschließt, wobei das Multiplikatorventil seinerseits in Bezug auf die Mittenachse des Hohlkolbens exzentrisch angeordnet ist.

Der Hohlkolben der erfindungsgemäßen Vorrichtung ist dabei relativ zu einem ihn aufnehmenden Zylinder teleskopartig entlang dessen Mittenachse verschiebbar, wobei die Ventilanordnung an dem Endbereich des Hohlkolbens dazu dient, eine in dem aufnehmenden Zylinder ausgebildete Hydraulikkammer in einen hinteren Hydraulikkammerbereich und einen vorderen Hydraulikkammerbereich zu unterteilen. In dem Hohlkolben ist weiterhin an seinem der Ventilanordnung entgegengesetzten Ende ein Gasraum ausgebildet, welcher mittels eines Trennkolbens von dem vorderen Hydraulikkammerbereich getrennt ist. Der Trennkolben ist ebenfalls entlang der Mittenachse beweglich angeordnet.

Beim Einfedern, d.h. beim Einschieben des Hohlkolbens in den Zylinder beispielsweise infolge eines Stoßes wird die in der hinteren Hydraulikkammer befindliche Hydraulikflüssigkeit mit Druck beaufschlagt und strömt infolgedessen in den Überströmbereich der Ventilanordnung und von dort über den mindestens einen Kanal in den exzentrischen Hydraulikraum an der Eingangsseite des Multiplikatorventils. In diesem Fall herrscht dann in der hinteren Hydraulikkammer, im Überströmbereich sowie in dem exzentrischen Hydraulikraum der gleiche Druck.

In dem vorderen Hydraulikkammerbereich, d.h. in dem ebenfalls mit Hydraulikflüssigkeit gefüllten Raum zwischen dem Trennkolben und der Ausgangsfläche des Multiplikatorventils herrscht infolge der freien Beweglichkeit des Trennkolbens der gleiche Druck wie innerhalb des Gasraumes auf der anderen Seite des Trennkolbens. Übersteigt der Druck in dem exzentrischen Hydraulikraum an der Eingangsseite des Multiplikatorventils multipliziert mit dem Auslegungsfaktor des Multiplikatorventils den Druck in der vorderen Hydraulikkammer, d.h. ist dieser in dem exzentrischen Hydraulikraum herrschende Druck groß genug, um das Multiplikatorventil gegen den in der vorderen Hydraulikkammer herrschenden Druck aus seinem Ventilsitz herauszudrücken, so entsteht am Multiplikatorventil ein Durchlassspalt, durch welchen Hydraulikflüssigkeit aus dem exzentrischen Hydraulikraum, d.h. also auch aus der hinteren Hydraulikkammer in die vordere Hydraulikkammer strömen kann. Infolge des raumfordernden Prozesses bewegt sich der Trennkolben weiter in den Gasraum hinein und komprimiert das darin enthaltene Gas.

Durch das Vorsehen des exzentrischen Hydraulikraums zusätzlich zu dem Überströmbereich ist es somit möglich, das Multiplikatorventil exzentrisch derart anzuordnen, dass es den Überströmbereich selbst nicht umgeben muss. Hierdurch wird eine beträchtliche Reduzierung des Volumens des Multiplikatorventils erzielt, was zudem seine Konstruktion erheblich vereinfacht. Durch die außermittige Anordnung des Multiplikatorventils in der Ventilanordnung ergibt sich neben der einfachen und kostengünstigen Bauweise der weitere Vorteil, einen Drosseldorn an der Vorrichtung zum Abdämpfen von Druckkräften vorsehen zu können, ohne dass der Einsatz des Multiplikatorventils zu einer voluminösen Bauweise führen würde. Hieraus ergibt sich als Konsequenz, dass durch den sehr geringen benötigten Bauraum die Gesamtlänge der Dämpfungsvorrichtung nicht vergrößert werden muss.

Vorteilhafte Weiterbildungen der Erfindung sind in den Unteransprüchen angegeben.

Beispielsweise ist es vorgesehen, einen Drosseldorn am Zylinder in dessen Mittelachse derart zu befestigen, dass dieser Drosseldorn in den Überströmbereich der Ventilanordnung hineinragt. In diesem Verbindungsbereich zwischen der hinteren Hydraulikkammer und dem Überströmbereich wird demnach ein Drosselspalt, in der Regel ein ringförmiger Drosselspalt ausgebildet. Aus der hinteren Hydraulikkammer verdrängte Hydraulikflüssigkeit strömt somit durch diesen zwischen dem Drosseldorn und dem Überströmbereich gebildeten Drosselspalt, wobei der resultierende Druckabfall primär vom Spaltquerschnitt abhängt. Dringt der Hohlkolben weiter in den Zylinder ein, verschiebt sich infolgedessen auch die am Endbereich des Hohlkolbens ausgebildete Ventilanordnung weiter in den Zylinder hinein, wodurch der Drosseldorn tiefer in den Überströmbereich der Ventilanordnung eindringt. Durch eine speziell angepasste Formgebung des Drosseldorns verringert sich der Querschnitt des Drosselspaltes beim Eindringen des Drosseldornes, d.h. der Spaltquerschnitt des Drosselspaltes wird umso kleiner, je tiefer der Drosseldorn in den Überströmbereich der Ventilanordnung eindringt.

Durch diese konstruktive Maßnahme wird der Tatsache Rechnung getragen, dass während eines Stoßabsorptionsvorganges durch die Dämpfungsvorrichtung infolge der Energieabsorption die Relativgeschwindigkeit der aufeinanderstoßenden Fahrzeuge über den zeitlichen Verlauf des Stoßvorganges abnimmt. Während eines solchen Stoßvorganges reduziert sich daher durch das Abbremsen der Fahrzeugmassen auch die Eindrückgeschwindigkeit, d.h. die Einfederungsgeschwindigkeit des Dämpfers. Neben der Abhängigkeit von weiteren Größen lassen sich die dabei auftretenden hydraulischen Kräfte als Funktion aus dem Drosselspaltquerschnitt und der Eindrückgeschwindigkeit, d.h. Einfederungsgeschwindigkeit der Dämpfungsvorrichtung beschreiben. Dadurch, dass der Drosseldorn ausgebildet ist, durch seine Formgebung den Drosselspaltquerschnitt abhängig von seiner Eindringtiefe in den Überströmbereich der Ventilanordnung zu verringern, kann durch die während des Einfedervorganges abnehmende Geschwindigkeit, mit welcher der Drosseldorn in den Überströmbereich eindringt, die auftretende hydraulische Kraft weitestgehend konstant gehalten werden. Gleichzeitig sorgt die Kombination mit dem exzentrisch angeordneten Multiplikatorventil dafür, dass sich auch in diesem Fall der Kombination mit einem Drosseldorn bei einfacher Anordnung und geringem Bauvolumen gleichsam eine vorteilhafte statische Kennlinie der Dämpfungsvorrichtung ergibt.

Des Weiteren ist es vorgesehen, dass die Ventilanordnung ferner ein Überlastventil aufweist, wobei das Überlastventil mittels mindestens eines Überlastkanals mit der hinteren Hydraulikkammer verbunden ist und im geöffneten Zustand ein Überströmen der Hydraulikflüssigkeit aus dem hinteren Hydraulikkammerbereich in den vorderen Hydraulikkammerbereich unter Umgehung des regulären Flüssigkeitsweges durch den Überströmbereich und das Multiplikatorventil ermöglicht. Ein derartiges Überlastventil (auch Überdruckventil genannt) ist dabei in der Regel in dem an die vordere Hydraulikkammer angrenzenden Bereich der Ventilanordnung angeordnet und wird mittels einer Vorspannkraft in seinem Ventilsitz gehalten. Im regulären Belastungsfall der Dämpfungsvorrichtung verschließt das Überlastventil daher den mindestens einen Überlastkanal, mittels dessen seine Eingangsfläche in direkter Wirkverbindung mit dem hinteren Hydraulikkammerbereich steht.

Die Vorspannkraft, welche das Überlastventil in seinem Ventilsitz hält, ist in der Regel um ein Vielfaches höher als die Kraft, welche sich aufgrund der Druckdifferenz zwischen dem exzentrischen Hydraulikraum und der vorderen Ventilkammer an der hinteren Wirkfläche (Ventileingang) des Multiplikatorventils während normaler Betriebszustände, d.h. im regulären Fahrbetrieb oder Rangierbetrieb der Wagenkästen ergeben. Ein Überlastfall, welcher einen extremen Druckanstieg innerhalb der hinteren Hydraulikkammer und somit auch im Überlastkanal nach sich zieht, kann sich beispielsweise bei unfallbedingten Zusammenstößen des Schienenfahrzeugs mit einem Hindernis ergeben. In diesem Fall wird das Überlastventil gegen die Vorspannkraft aus seinem Ventilsitz herausgedrückt und gibt eine direkte Überströmmöglichkeit für die Hydraulikflüssigkeit aus der hinteren Hydraulikkammer in die vordere Hydraulikkammer frei. Durch die exzentrische Anordnung des Multiplikatorventils ist es möglich, beispielsweise durch eine Vielzahl von Überlastkanälen einen wesentlich größeren effektiven Strömungsquerschnitt dieses Systems aus Überlastkanälen und Überlastventil bei gleichzeitig hoher Vorspannkraft des Überlastventils zu erreichen als den effektiven Strömungsquerschnitt durch den Drosselspalt, die exzentrische Hydraulikkammer und das Multiplikatorventil. Hiermit ergibt sich in besonders vorteilhafter Weise ein von der Betätigungsgeschwindigkeit unabhängiges Verhalten der Dämpfungsvorrichtung im Überlastfall, welches ein plastisches Verformen der Vorrichtung zum Abdämpfen von Druckkräften in einem solchen Überlastfall und somit den Austritt von Hydraulikflüssigkeit in die Umwelt verhindert.

Es ist möglich, die Vorspannkraft, welche das Überlastventil in seinem Sitz hält, mittels einer Feder, vorzugsweise einer Ringfeder aufzubringen. Diese Lösung hat den Vorteil, dass mit sehr einfachen und effektiven Mitteln konstruktionsseitig die Vorspannkraft, auch Schaltkraft genannt, die zum Auslösen des Überlastventils notwendig ist, vorgegeben werden kann.

In besonders vorteilhafter Weise ist es vorgesehen, die zum Öffnen des Überlastventils erforderliche Schaltkraft in einen Beriech zwischen 700 und 900 kN, vorzugsweise 800 kN festzulegen, um gängige Normen zu erfüllen.

In besonders vorteilhafter Weise ist der effektive Strömungsquerschnitt vom hinteren Hydraulikkammerbereich durch den Drosselspalt und den Durchlassspalt des geöffneten Multiplikatorventils geringer als der effektive Strömungsquerschnitt vom hinteren Hydraulikkammerbereich durch den Überlast-Druckspalt des geöffneten Überlastventils. Dies hat den Vorteil, dass im Auslösefall des Überlastventils ein effektiver Umgehungspfad für die Hydraulikflüssigkeit unter Umgehung des herkömmlichen Strömungspfades durch den Drosselspalt und am Multiplikatorventil vorbei geschaffen wird.

Bei der Bemessung der Auslösekraft für das Überlastventil ist es zudem vorgesehen, dass die zum Öffnen des Multiplikatorventils minimal notwendige Kraft infolge des Druckverhältnisses zwischen dem Druck im exzentrischen Hydraulikraum und dem Druck im vorderen Hydraulikkammerbereich geringer ist als die zum Öffnen des Überlastventils minimal notwendige Auslösekraft, beispielsweise die Federschaltkraft.

Des Weiteren ist es vorgesehen, dass die Ventilanordnung ferner ein Rückschlagventil, insbesondere ein Kugelrückschlagventil aufweist, wobei das Rückschlagventil derart angeordnet ist, dass es ein Rückströmen der Hydraulikflüssigkeit aus dem vorderen Hydraulikkammerbereich in den Überströmbereich bzw. aus dem vorderen Hydraulikkammerbereich in den hinteren Hydraulikkammerbereich genau dann ermöglicht, wenn der Druck im vorderen Hydraulikkammerbereich größer ist als der Druck im Überströmbereich bzw. der Druck im hinteren Hydraulikkammerbereich. Durch eine solche Lösung mit Rückschlagventil ist es möglich, das Wiederausfedern der Dämpfungsvorrichtung, den sogenannten Rückhub, dergestalt zu regulieren, dass dieser Rückhub schnell erfolgen kann, ohne dass sich im Belastungsfall, also beim Einfedern durch diesen Rückhubkanal eine Bypass-Möglichkeit, also eine Umgehungsmöglichkeit der Hydraulikflüssigkeit aus dem Überströmbereich am Multiplikatorventil vorbei in die vordere Hydraulikkammer ergäbe.

Weiterhin kann es vorgesehen sein, dass das Flächenverhältnis zwischen der vorderen Wirkfläche, also der Ausgangsfläche des Multiplikatorventils und der hinteren Wirkfläche, also der Eingangswirkfläche des Multiplikatorventils derart gewählt ist, dass zum Öffnen des Multiplikatorventils in dem exzentrischen Ringraum der Druck ein Vielfaches des Druckes betragen muss, welcher im vorderen Hydraulikkammerbereich herrscht. Hierbei ist es insbesondere von Vorteil, diesen Multiplikationsfaktor des Multiplikatorventils in einem Bereich zwischen zwei und acht, beispielsweise auf fünf festzulegen, was bedeutet, dass im exzentrischen Ringraum jeweils ein Wert des Druckes, der im vorderen Hydraulikkammerbereich vorliegt, multipliziert mit diesem Multiplikationsfaktor herrschen muss, um das Multiplikatorventil aus seinem Ventilsitz in seine Öffnungsposition zu verschieben. Im gewählten Beispiel, d.h. wenn der Multiplikationsfaktor auf fünf festegelegt ist, muss also im exzentrischen Ringraum mindestens das Fünffache des Druckes herrschen, der im vorderen Hydraulikkammbereich vorliegt, um das Multiplikatorventil zu öffnen. Durch die freie Beweglichkeit des Trennkolbens innerhalb des Hohlkolbens herrscht im vorderen Hydraulikkammerbereich derselbe Druck wie im Gasraum. Folglich bedeutet dies, dass innerhalb der Gasfeder, also im Gasraum, ein Druck, der dem Druck in der hinteren Hydraulikkammer multipliziert mit dem Kehrwert des Multiplikationsfaktors entspricht, ausreicht, um das Multiplikatorventil in seinem Ventilsitz, d.h. in der Geschlossen-Position zu halten und somit ein frühzeitiges Überströmen der Hydraulikflüssigkeit aus dem Überströmbereich in die vordere Hydraulikkammer zu verhindern. Im gewählten Beispiel eines Multiplikationsfaktors von fünf bedeutet dies also, dass ein Fünftel des Druckes, der in der hinteren Hydraulikkammer herrscht, innerhalb der Gasfeder ausreicht, um das Multiplikatorventil geschlossen zu halten. Hierdurch kann der Fülldruck des Gasraumes erheblich niedriger bemessen werden, als wenn kein Multiplikatorventil vorgesehen wäre. Hinsichtlich des Gasraumes ist es vorgesehen, dass dieser mit einem unter Überdruck stehenden Gas gefüllt ist. Dieses unter Überdruck stehende Gas kann insbesondere Stickstoff sein. Durch die Wahl des Gases und dessen damit verbundenen thermodynamischen Eigenschaften sowie mit der Wahl des Überdruckes kann damit in vorteilhafter Weise die statische Kennlinie der erfindungsgemäßen Vorrichtung zum Abdämpfen von Druckkräften beeinflusst werden.

Weiterhin ist es vorgesehen, den Hohlkolben mit mindestens einem Hohlkolben-Dichtungselement zu versehen, wobei dieses Hohlkolben-Dichtungselement derart ausgebildet ist, dass es während des Verschiebens des Hohlkolbens innerhalb des Zylinders ein Abdichten des Innenraums gegenüber dem Außenraum gewährleistet.

Des Weiteren kann es vorgesehen sein, auch den Trennkolben mit mindestens einem Trennkolben-Dichtungselement auszustatten, welches gleichsam neben seiner dichtenden Eigenschaften beispielsweise mittels Abstreifringen ein Abstreifen von Hydraulikflüssigkeit gewährleistet, wenn der Trennkolben innerhalb des Hohlkolbens verschoben wird. Hierdurch wird das Füllgas innerhalb des Gasraumes in seiner Reinheit möglichst wenig beeinträchtigt, was zu einer besseren Langlebigkeit der erfindungsgemäßen Vorrichtung beiträgt und es ermöglichen kann, die Wartungsintervalle zu verlängern.

Im Schiebebetrieb der miteinander gekoppelten spurgeführten Fahrzeuge kann es notwendig sein, den betriebsbedingten Einfederweg der erfindungsgemäßen Vorrichtung zum Abdämpfen von Druckkräften durch eine hohe Vorspannung des Gasfederanteils zu begrenzen, um im Falle eines Abbremsens des Schubverbandes miteinander gekoppelter spurgeführter Fahrzeuge den Ruck der bei einer plötzlichen Bremsung in Zugrichtung belasteten Kupplungseinrichtungen derart zu begrenzen, dass eine Beschädigung der Kupplungseinrichtungen wie beispielsweise ein Abreißen von Kupplungszughaken oder dergleichen vermieden werden kann.

Durch die hohe Vorspannung des Gasfederanteils der Vorrichtung zum Abdämpfen von Druckkräften und den dadurch bedingten erwünschten geringen Betreibseinfederweg während des Schubbetriebes ergibt sich gleichzeitig der Nachteil, dass im Falle eines eventuell auftretenden unfallbedingten Stoßes durch diese hohe Vorspannung die dynamischen Kräfte nicht mehr auf das notwendige Maß begrenzt werden können.

Zu diesem Zweck kann es vorgesehen sein, dass das Multiplikatorventil eine Multiplikatorventil-Dämpfungseinrichtung aufweist. Diese Multiplikatorventil-Dämpfungseinrichtung weist ihrerseits einen Dämpfungskolben, einen Dämpfungsringraum sowie eine Dämpfungs-Überströmeinrichtung auf. Der Dämpfungskolben der Multiplikatorventil-Dämpfungseinrichtung ist mit der vorderen Wirkfläche des Multiplikatorventils verbunden und erlaubt dann, wenn das Multiplikatorventil maximal geöffnet ist, ein weitgehend ungedämpftes Überströmen von Hydraulikflüssigkeit in den Dämpfungsringraum. Durch ein stärkeres Einfedern der Dämpfungsvorrichtung steigt dann innerhalb der Gasfeder der Gasdruck, was sich unmittelbar dahingehend auswirkt, dass die auf die vordere Wirkfläche des Multiplikatorventils einwirkende Kraft steigt und das Multiplikatorventil aus seiner Öffnungsposition in Richtung seiner Schließposition drückt. Die Dämpfungs-Überströmeinrichtung, welche beispielsweise als speziell genuteter Kolbenring ausgeführt sein kann, ist dann derart ausgestaltet, dass in diesem Fall, in welchem das Multiplikatorventil aus seiner maximalen Öffnungsposition in Richtung seiner Geschlossenposition bewegt wird, nur noch ein gedämpftes Überströmen von Hydraulikflüssigkeit aus dem Dämpfungsringraum zurück in den vorderen Hydraulikkammerbereich ermöglicht. Während dieses Überströmvorganges wird die Bewegung des Multiplikatorventils aus seiner maximalen Öffnungsposition in Richtung seiner Geschlossenposition gedämpft, sodass ein derartig gedämpftes Multiplikatorventil über einen längeren Zeitraum zumindest teilweise geöffnet bleibt als ein Multiplikatorventil ohne Multiplikatorventil-Dämpfungseinrichtung.

Hierdurch wird der Vorteil erzielt, dass im Falle einer dynamischen Betätigung der Vorrichtung zum Abdämpfen von Druckkräften die dynamischen Kräfte beim Stoß besser auf das notwendige Maß begrenzt werden können. Im Falle einer quasistatischen Betätigung der Vorrichtung zum Abdämpfen von Duckkräften ist der durch die Dämpfungs-Überströmeinrichtung ermöglichte Leckstrom von Hydraulikflüssigkeit derart bemessen, dass in diesem Falle die Multiplikatorwirkung des Multiplikatorventils annähernd vollständig aufrecht erhalten wird, sodass bei einer derartigen quasistatischen Betätigung die weitgehend vollständige Multiplikationswirkung aufrecht erhalten wird.

Im Folgenden werden zwei bevorzugte Ausführungsbeispiele der erfindungsgemäßen Vorrichtung zum Abdämpfen von Druckkräften anhand einer Zeichnung näher erläutert.

Es zeigen:
- Fig. 1:: eine Schnittansicht eines ersten Ausführungsbeispiels der erfindungsgemäßen Vorrichtung;
- Fig. 2:: die Ventilanordnung aus Fig. 1 im Detail;
- Fig. 3:: eine Schnittansicht eines zweiten Ausführungsbeispiels der erfindungsgemäßen Vorrichtung;
- Fig. 4:: die Ventilanordnung gemäß Fig. 3 im Detail; und
- Fig. 5:: eine Ventilanordnung ähnlich der Ventilanordnung aus Fig. 2, wobei ein Multiplikatorventil mit Multiplikatorventil-Dämpfungseinrichtung zum Einsatz kommt.

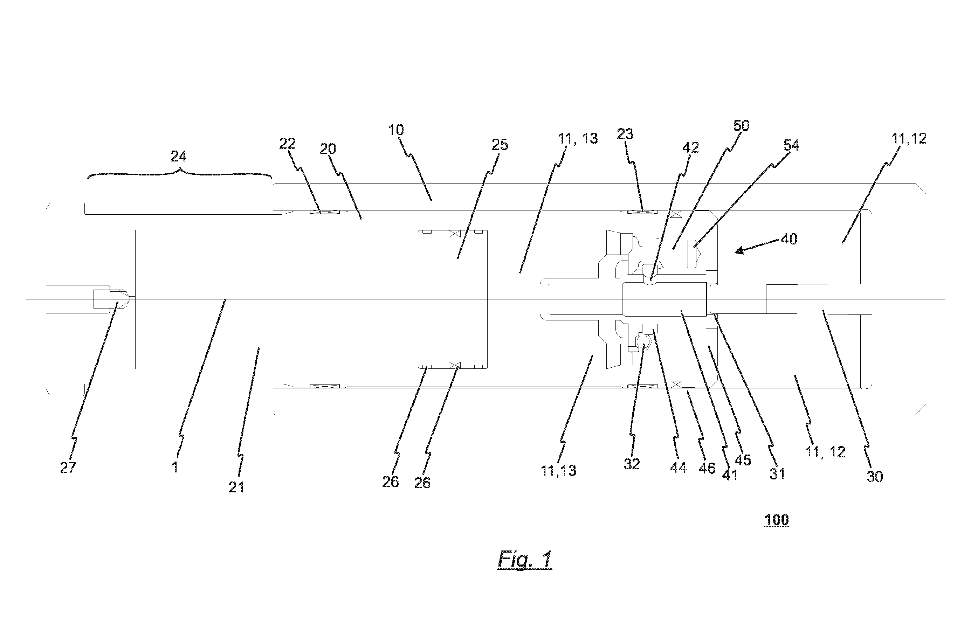

Fig. 1 zeigt eine Schnittansicht eines ersten Ausführungsbeispiels einer Vorrichtung zum Abdämpfen von Druckkräften, welche im Wesentlichen aus einem Zylinder 10 und einem darin teleskopartig entlang einer Mittenachse 1 verschiebbar angeordneten Hohlkolben 20. In einem Endbereich des Hohlkolbens ist eine Ventilanordnung 40 angeordnet, welche eine innerhalb des Zylinders 10 ausgebildete Hydraulikkammer 11 in einen hinteren Hydraulikkammerbereich 12 und einen vorderen Hydraulikkammerbereich 13 unterteilt. Somit erstreckt sich die Hydraulikkammer 11 zumindest teilweise in den Hohlkolben 20 hinein; mit anderen Worten ist der vordere Hydraulikkammerbereich 13 innerhalb des Hohlkolbens 20 ausgebildet.

Ein Trennkolben 25 trennt den vorderen Hydraulikkammerbereich 13 von einem innerhalb des Hohlkolbens 20 ausgebildeten Gasraum 21, wobei der Gasraum 21 über ein Füllventil 27 mit unter Druck stehendem Füllgas befüllt werden kann. Der Trennkolben 25 weist Trennkolben-Dichtungselemente 26 auf und ist entlang der Mittenachse 1 beweglich angeordnet. Eine Volumenzunahme im vorderen Hydraulikkammerbereich 13, beispielsweise durch Einströmen von Hydraulikflüssigkeit aus dem hinteren Hydraulikkammerbereich 12 in den vorderen Hydraulikkammerbereich 13, bewirkt somit ein Verschieben des Trennkolbens 25 in den Gasraum 21 hinein, wobei das Füllgas im Gasraum 21 gleichzeitig komprimiert wird.

Bei einem Verschieben des Hohlkolbens 20 innerhalb des Zylinders 10 verhindern erste Hohlkolben-Dichtungselemente 22 und zweite Hohlkolben-Dichtungselemente 23 ein Austreten von Hydraulikflüssigkeit aus der Hydraulikkammer 11 an dem Spalt zwischen Zylinder 10 und Hohlkolben 20 vorbei in den die Vorrichtung 100 umgebenden Außenbereich. Insbesondere wird beispielsweise durch nicht dargestellte Abstreifringe am ersten Holkolben-Dichtungselement 22 und/oder am zweiten Hohlkolben-Dichtungselement 23 gewährleistet, das im Wesentlichen keine Hydraulikflüssigkeit die Oberfläche des momentan nicht in den Zylinder eingeschobenen Außenbereich 24 des Hohlkolbens benetzt.

Ein Drosseldorn 30 ist im hinteren Hydraulikkammerbereich der Hydraulikkammer ausgebildet und in der Mittenachse 1 des Zylinders befestigt. In dem in Fig. 1 dargestellten Zustand der Vorrichtung 100 ragt der Drosseldorn 30 teilweise in einen Überströmbereich 41 der Ventilanordnung 40 dergestalt hinein, dass zwischen dem Drosseldorn 30 und dem Überströmbereich 41 ein Drosselspalt 31 ausgebildet wird. Hydraulikflüssigkeit, welche aus dem hinteren Hydraulikkammerbereich 12 in den Überströmbereich 41 strömt, wird durch den Druckabfall an dem Durchlass begrenzenden Drosselspalt 31 während des Überströmens gedrosselt. Das Gehäuse 45 der Ventilanordnung 40 ist mit dem Endbereich des Hohlkolbens 20 verbunden. Bei einem Kompressionsvorgang der erfindungsgemäßen Vorrichtung 100 wird der Hohlkolben 20 durch Einwirken von äußeren Kräften entlang der die Längsrichtung darstellenden Mittenachse 1 in den Zylinder 10 hinein verschoben. Demgemäß bewegt sich auch die am Hohlkoben 20 befestigte Ventilanordnung 40 weiter in den Zylinder 10, also den hinteren Hydraulikkammerbereich 12, hinein. Hierdurch entsteht ein Überdruck im hinteren Hydraulikkammerbereich 12 und bei geringen Betätigungsgeschwindigkeiten, also bei quasistatischem Einfedern, stellt sich der gleiche Überdruck im Überströmbereich 41 der Ventilanordnung ein. Über mindestens einen Kanal 42 dieses Überströmbereichs ist ein exzentrisch angeordneter Hydraulikraum 43 mit dem Überströmbereich 41 der Ventilanordnung 40 verbunden, so dass auch in diesem exzentrischen Hydraulikraum 43 in diesem quasistatischen Fall der gleiche Überdruck wie im hinteren Hydraulikkammerbereich 12 der Hydraulikkammer 11 vorliegt. Dieser exzentrische Hy draulikraum 43 wird mittels eines Multiplikatorventils 50 mit dessen Eingangsseite verschlossen. Auf die Ausgangsseite des Multiplikatorventils 50 wirkt der Druck, der im vorderen Hydraulikkammerbereich 13 der Hydraulikkammer 11 herrscht.

Bei genügend großem Druck, d.h. bei einem entsprechend ausreichenden Druckverhältnis zwischen dem Druck im exzentrischen Hydraulikraum 43 und dem Druck im vorderen Hydraulikkammerbereich 13 öffnet das Multiplikatorventil und erlaubt ein Überströmen von Hydraulikflüssigkeit aus dem Überströmbereich 41 durch den Kanal 42 und den exzentrischen Hydraulikraum 43 in den vorderen Hydraulikkammerbereich 13.

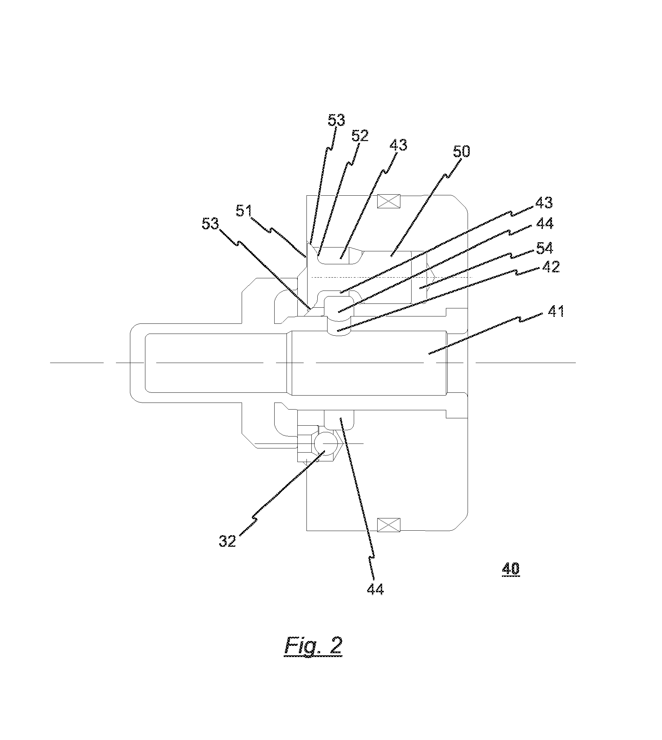

Anhand der in Fig. 2 gezeigten Detailansicht der Ventilanordnung 40 aus Fig. 1 wird im Folgenden der Ablauf des Überströmens detaillierter erläutert.

Bei einem Einströmen von Hydraulikflüssigkeit über den Kanal 42 in den exzentrischen Hydraulikraum 43 wirkt der Druck im exzentrischen Hydraulikraum 43 auf die hintere Wirkfläche 52, d.h. die Eingangsfläche des Multiplikatorventils. Ist dieser auf die hintere Wirkfläche 52 wirkende Druck größer als der auf die vordere Wirkfläche 51 des Multiplikatorventils wirkende Druck multipliziert mit dem auslegungsgemäßen Multiplikationsfaktor des Multiplikatorventils 50, so wird das Multiplikatorventil 50 aus seinem Sitz gedrückt und gibt den Durchlassspalt 53 frei. Ein Rückstellen des Multiplikatorventils wird unter anderem dadurch gewährleistet, dass in der hinteren Ventilkammer 54 des Multiplikatorventils 50 ein relativ niedriger Druck, nämlich der Druck, der dem Umgebungsdruck während der Montage entspricht, herrscht, während beim Schließvorgang des Multiplikatorventils auf dieses der sehr viel höhere Druck aus der Gasfeder wirkt.

Wenn beim Öffnen des Multiplikatorventils 50 der Durchlassspalt 53 zumindest teilweise freigegeben wird, führt dies beim Überströmen der Hydraulikflüssigkeit zu einem weiteren Druckabfall über diesem Durchlassspalt 53 zusätzlich zu dem Druckabfall im Drosselspalt 31. Insbesondere bei einem quasistatischen Betätigungsvorgang der Vorrichtung 100 führt dies zu einer wirkungsvollen statischen Kraft-Weg-Kennlinie der erfindungsgemäßen Vorrichtung 100.

Um eine Rückströmmöglichkeit der Hydraulikflüssigkeit aus dem vorderen Hydraulikkammerbereich 13 in den hinteren Hydraulikkammerbereich 12 bei einem Rückhub des Hohlkolbens 20 zu ermöglichen, ohne einen im Druckbelastungsfall zusätzlichen unerwünschten Überströmkanal zwischen dem Überströmbereich 41 und dem vorderen Hydraulikkammerbereich 12 auszubilden, ist ein Rückschlagventil 32 in Form eines Kugelventils vorgesehen, welches einen Rückströmpfad der Hydraulikflüssigkeit aus dem vorderen Hydraulikkammerbereich 13 in den hinteren Hydraulikkammerbereich 12 ermöglicht und gleichzeitig im Druckbelastungsfall diesen dadurch gebildeten zusätzlichen Überströmkanal verschließt.

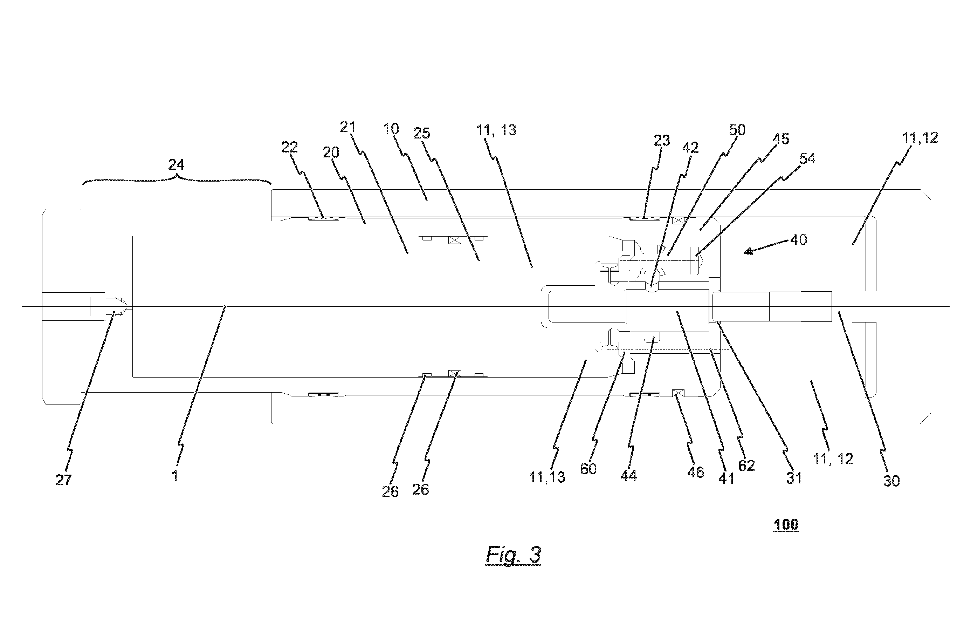

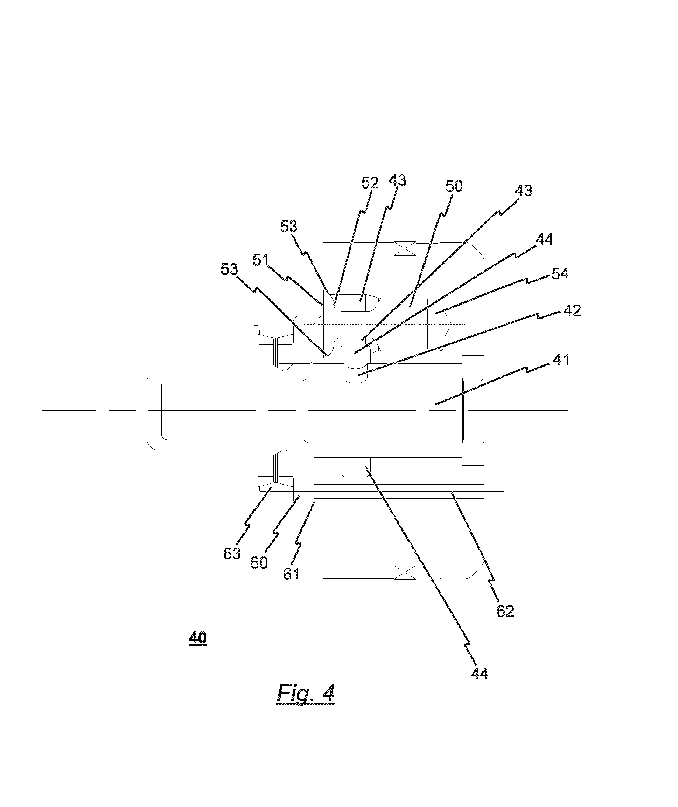

Fig. 3 zeigt eine Vorrichtung 100 zum Abdämpfen von Druckkräften ähnlich der Vorrichtung 100 in Fig. 1, wobei in der Detailansicht der Ventilanordnung 40 gemäß Fig. 4 zu erkennen ist, dass die Ventilanordnung 40 zusätzlich ein mittels einer Feder 63 belastetes Überlastventil 60 aufweist. Das Überlastventil 60 selbst kann durch die exzentrische Anordnung des Multiplikatorventils 50 zentriert, d.h. um die Mittenachse 1 herum angeordnet werden. Über einen Überlast-Durchlassspalt 61 ist die Auslösefläche des Überlastventils 60 mit dem hinteren Hydraulikkammerbereich 12 verbunden, d.h. im Überlastkanal 62 herrscht stets derselbe Druck wie im hinteren Hydraulikkammerbereich 12. Der Überlastkanal 62 kann durch eine Bohrung gebildet werden; gleichwohl ist es vorgesehen, eine Vielzahl von Überlastkanälen 62 vorzusehen, um einen möglichst großen effektiven Strömungsquerschnitt im Überlastfall erzielen zu können. Die Feder 63 ist insbesondere als Ringfeder ausgebildet und weist eine hohe Vorspannkraft, beispielsweise 20 kN, auf. Aufgrund der Querschnittsverhältnisse führt eine derartige Federvorspannung von beispielsweise 20 kN zu einer höheren Auslösekraft des Überlastventils, beispielsweise 800kN. Hierdurch kann die Ventilfläche, auf welche der Druck des mindestens einen Überlastkanals 62 in Richtung Öffnen wirkt, relativ groß sein. Dadurch ist in geöffneter Position des Überlastventils 60 ein großer Volumenstrom möglich.

Dadurch, dass bei Auslösen des Überlastventils 60 im Überlastfall, d.h. bei hohem Druck im hinteren Hydraulikkammerbereich 12, jegliche Drosselstellen, an welchen ein Druckabfall der strömenden Hydraulikflüssigkeit möglich wäre, umgangen werden, ist ein direktes Überströmen der Hydraulikflüssigkeit aus dem hinteren Hydraulikkammerbereich 12 in den vorderen Hydraulikkammerbereich 13 möglich ("Bypass-Lösung"). Da einzig die Vorspannkraft der Feder 63 des Überlastventils 60 ausschlaggebend für den Ansprechdruck bzw. Schaltdruck des Überlastventils 60 ist und keine Drosselstelle passiert wird, ist diese Überlastfunktion weitestgehend unabhängig von der Betätigungsgeschwindigkeit der Vorrichtung 100.

Durch das Überströmen in den ohnehin als Hydraulikreservoir vorgesehenen vorderen Hydraulikkammerbereich 13 wird somit im Überlastfall lediglich der Trennkolben 25 unter Verdichtung des Gases im Gasraum 21 schnell und stark in Richtung Gasraum 21 bewegt. Ein Bersten der erfindungsgemäßen Vorrichtung 100 zum Abdämpfen von Druckkräften, das ein Austreten der Hydraulikflüssigkeit zur Folge hätte, kann somit bei gleichzeitiger Beibehaltung einer kompakten Bauweise und bei gleichzeitigem guten statischem und dynamischem Ansprechverhalten der Vorrichtung 100 wirksam verhindert werden.

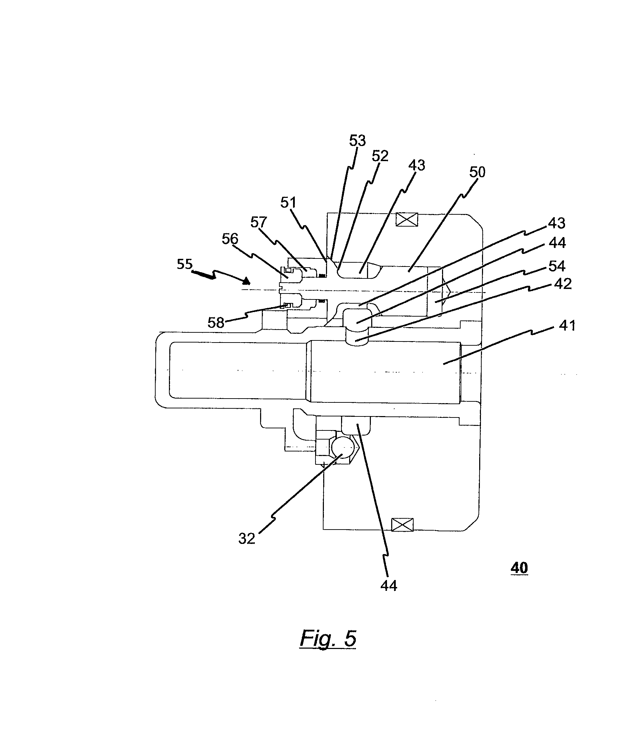

Fig. 5 zeigt eine Ventilanordnung ähnlich der Ventilanordnung aus Fig. 2, wobei hier allerdings ein Multiplikatorventil (50) mit Multiplikatorventil-Dämpfungseinrichtung (55) zum Einsatz kommt. Die Multiplikatorventil-Dämpfungseinrichtung (55) weist einen Dämpfungskolben (56) sowie eine Dämpfungs-Überströmeinrichtung (58), beispielsweise in Form eines speziell genuteten Kolbenringes auf, wobei durch die spezielle Anordnung des Dämpfungskolbens (56) ein Dämpfungsringraum (57) ausgebildet wird. Der Dämpfungsringraum (57) ist zwischen der vorderen Wirkfläche (51) und dem Dämpfungskolben (56) ausgebildet. Mit Hilfe der Dämpfungs-Überströmeinrichtung (58) kann in einem Fall, in welchem das Multiplikatorventil (50) sich in einer maximalen Öffnungsposition befindet, Hydraulikflüssigkeit aus dem vorderen Hydraulikammerbereich (13) der Hydraulikkammer (11) in diesen Dämpfungsringraum (57) überströmen. Bei steigendem Druck auf die vordere Wirkfläche (51) des Multiplikatorventils (50) wird dieses aus seiner maximalen Öffnungsposition in Richtung seiner Geschlossenposition, d.h. in seinen Ventilsitz hineinbewegt. In diesem Falle liegt dann die Dämpfungs-Überströmeinrichtung (58) am Anschlag des Dämpfungskolbens (56) an und dichtet die Überströmmöglichkeit für Hydraulikflüssigkeit zwischen dem vorderen Hydraulikammerbereich (13) und dem Dämpfungsringraum (57) bis auf ein speziell vorgesehenes und speziell bemessenes Leckstromvolumen ab. Durch dieses Leckstromvolumen von dem Dämpfungsringraum (57) in Richtung des vorderen Hydraulikkammerbereiches (13), während das Multiplikatorventil (50) aus seiner maximalen Öffnungsposition in Richtung seiner Geschlossenposition bewegt wird, wird das Multiplikatorventil (50) im Falle eines dynamischen Stoßes auf die Vorrichtung (100) zum Abdämpfen von Druckkräften über einen Zeitraum von wenigen Millisekunden länger in einer Öffnungsposition gehalten. Hierdurch können die dynamischen Kräfte im Falle eines dynamischen Stoßes besser auf das notwendige Maß begrenzt werden.

Im Falle einer quasistatischen Einfederung der Vorrichtung (100) zum Abdämpfen von Druckkräften, beispielsweise im Schiebebetrieb der miteinander gekoppelten spurgeführten Fahrzeuge ist dieser Leckstrom derart bemessen, dass die Multiplikatorwirkung des Multiplikatorventils (50) in diesem Falle nicht aufgehoben ist.

Die Erfindung ist nicht auf die unter Bezugnahme auf die beigefügten Zeichnungen beschriebenen Ausführungsformen beschränkt. Vielmehr sind entsprechende Modifikationen denkbar, im Rahmen der nachfolgenden Ansprüche.

### Bezugszeichenliste

- 1: Mittenachse
- 10: Zylinder, insbesondere Kreiszylinder
- 11: Hydraulikkammer
- 12: hinterer Hydraulikkammerbereich der Hydraulikkammer
- 13: vorderer Hydraulikkammerbereich der Hydraulikkammer
- 20: Hohlkolben
- 21: Gasraum
- 22: erstes Hohlkolben-Dichtungselement
- 23: zweites Hohlkolben-Dichtungselement
- 24: nicht eingeschobener Außenbereich des Hohlkolbens
- 25: Trennkolben
- 26: Trennkolben-Dichtungselement
- 27: Füllventil
- 30: Drosseldorn
- 31: Drosselspalt
- 32: Rückschlagventil
- 40: Ventilanordnung
- 41: Überströmbereich der Ventilanordnung
- 42: Kanal des Überströmbereichs
- 43: exzentrischer Hydraulikraum
- 44: Ringraum
- 45: Gehäuse der Ventilanordnung
- 46: Ventilanordnungs-Dichtungselement
- 50: Multiplikatorventil
- 51: vordere Wirkfläche des Multiplikatorventils
- 52: hintere Wirkfläche des Multiplikatorventils
- 53: Durchlassspalt des Multiplikatorventils
- 54: hintere Ventilkammer des Multiplikatorventils
- 55: Multiplikatorventil-Dämpfungseinrichtung
- 56: Dämpfungskolben
- 57: Dämpfungsringraum
- 58: Dämpfungs-Überströmeinrichtung
- 60: Überlastventil
- 61: Überlast-Durchlassspalt
- 62: Überlastkanal
- 63: Feder des Überlastventils
- 100: Vorrichtung zum Abdichten von Druckkräften

## Patentansprüche

1. Vorrichtung (100) zum Abdämpfen von Druckkräften, wobei die Vorrichtung (100) folgendes aufweist:
- einen Zylinder (10), insbesondere Kreiszylinder, in welchem eine Hydraulikkammer (11) ausgebildet ist;
- einen relativ zum Zylinder (10) teleskopartig entlang einer Mittenachse (1) verschiebbaren Hohlkolben (20);
- eine an einem Endbereich des Hohlkolbens (20) ausgebildete Ventilanordnung (40) zum Unterteilen der Hydraulikkammer (11) in einen hinteren Hydraulikkammerbereich (12) und einen vorderen Hydraulikkammerbereich (13); und
- einen im Hohlkolben (20) entlang der Mittenachse (1) beweglich angeordneten Trennkolben (25), welcher einen innerhalb des Hohlkolbens (20) gebildeten Gasraum (21) von dem vorderen Hydraulikkammerbereich (13) trennt,
wobei die Ventilanordnung (40) einen mit dem hinteren Hydraulikkammerbereich (12) verbundenen Überströmbereich (41) und einen über mindestens einen Kanal (42) mit dem Überströmbereich (41) verbundenen exzentrischen Hydraulikraum (43) aufweist,
wobei die Ventilanordnung (40) ferner ein Überlastventil (60) aufweist, welches über mindestens einen Überlastkanal (62) in Verbindung mit dem hinteren Hydraulikkammerbereich (12) steht, wobei im geöffneten Zustand des Überlastventils (60) ein Überlast-Durchlassspalt (61) ein Überströmen von Hydraulikflüssigkeit aus dem hinteren Hydraulikkammerbereich (12) in den vorderen Hydraulikkammerbereich (13) ermöglicht, und
wobei die Ventilanordnung (40) ferner ein exzentrisch angeordnetes Multiplikatorventil (50) aufweist, wobei die hintere Wirkfläche (52) des Multiplikatorventils (50) mit dem exzentrischen Hydraulikraum (43) und die vordere Wirkfläche (51) des Multiplikatorventils (50) mit dem vorderen Hydraulikkammerbereich (13) in hydraulischer Wirkverbindung stehen, so dass bei geöffnetem Multiplikatorventil (50) Hydraulikflüssigkeit aus dem exzentrischen Hydraulikraum (43) in den vorderen Hydraulikkammerbereich (13) strömt
**dadurch gekennzeichnet,dass**
der effektive Strömungsquerschnitt des geöffneten Multiplikatorventils (50) geringer ist als der effektive Strömungsquerschnitt durch den Überlast-Druckspalt (61) des geöffneten Überlastventils (60).

2. Vorrichtung (100) nach Anspruch 1,
wobei in den Verbindungsbereich zwischen der hinteren Hydraulikkammer (12) und dem Überströmbereich (41) ein am Zylinder (10) befestigter Drosseldorn (30) hineinragt, wobei der Drosseldorn (30) derart geformt ist, dass ein in seinem Querschnitt von der Eindringtiefe des Hohlkolbens (20) in den Zylinder (10) abhängiger Drosselspalt (31) zwischen dem Drosseldorn (30) und dem Überströmbereich gebildet wird.

3. Vorrichtung (100) nach Anspruch 1 oder 2,
wobei das Überlastventil (60) mittels einer Feder (63), vorzugsweise einer Ringfeder, in seinen Ventilsitz gepresst wird.

4. Vorrichtung (100) nach einem der Ansprüche 1 bis 3,
wobei die zum Öffnen des Multiplikatorventils (50) minimal notwendige Kraft infolge des Druckverhältnisses zwischen dem Druck im exzentrischen Hydraulikraum (43) und dem Druck im vorderen Hydraulikkammerbereich (13) geringer ist als die zum Öffnen des Überlastventils (60) minimal notwendige Kraft, insbesondere die durch die Feder (63) aufgebrachte Kraft.

5. Vorrichtung (100) nach einem der Ansprüche 1 bis 4,
wobei die Ventilanordnung (40) ferner ein Rückschlagventil (32), insbesondere ein Kugelventil aufweist, wobei das Rückschlagventil (32) derart angeordnet ist, dass es ein Rückströmen der Hydraulikflüssigkeit aus dem vorderen Hydraulikkammerbereich (13) in den Überströmbereich (41) und/oder in den hinteren Hydraulikkammerbereich (12) genau dann ermöglicht, wenn der Druck im vorderen Hydraulikkammerbereich (13) größer ist als mindestens einer der Drücke im Überströmbereich (41) oder im hinteren Hydraulikkammerbereich (12).

6. Vorrichtung (100) nach einem der Ansprüche 1 bis 5,
wobei das Flächenverhältnis zwischen der vorderen Wirkfläche (51) des Multiplikatorventils (50) und der hinteren Wirkfläche (52) des Multiplikatorventils (50) derart gewählt ist, dass zum Öffnen des Multiplikatorventils in dem exzentrischen Ringraum (43) ein Vielfaches des Druckes, insbesondere das Zweibis Achtfache des Druckes der Hydraulikflüssigkeit im vorderen Hydraulikkammerbereich (13) herrschen muss.

7. Vorrichtung (100) nach einem der Ansprüche 1 bis 6,
wobei die zum Öffnen des Überlastventils (60) erforderliche Schaltkraft vorab festlegbar ist.

8. Vorrichtung (100) nach Anspruch 7,
wobei die zum Öffnen des Überlastventils (60) erforderliche Schaltkraft ohne nennenswerte konstruktive Änderung in weitem Rahmen den Erfordernissen der jeweiligen Anwendung angepasst werden kann.

9. Vorrichtung (100) nach einem der Ansprüche 1 bis 8,
wobei der Gasraum (21) mit einem bezogen auf den Umgebungsdruck unter Überdruck stehendem Gas, insbesondere Stickstoff, gefüllt ist.

10. Vorrichtung (100) nach einem der Ansprüche 1 bis 9,
wobei der Hohlkolben (20) mindestens ein Hohlkolben-Dichtungselement (22, 23) aufweist, welches derart ausgelegt ist, dass während des abgedichteten Verschiebens des Hohlkolbens (20) innerhalb des Zylinders (10) im Wesentlichen keine Hydraulikflüssigkeit in den nicht in den Zylinder (10) eingeschobenen Außenbereich (24) des Hohlkolbens (20) gelangt.

11. Vorrichtung (100) nach einem der Ansprüche 1 bis 10,
wobei der Trennkolben (25) mindestens ein Trennkolben-Dichtungselement (26) aufweist, welches ein Abstreifen von Hydraulikflüssigkeit während des abgedichteten Verschiebens des Trennkolbens (25) innerhalb des Hohlkolbens (22) dahingehend gewährleistet, dass im Wesentlichen keine Hydraulikflüssigkeit in den Gasraum (21) gelangt.

12. Vorrichtung (100) nach einem der Ansprüche 1 bis 11,
wobei das Multiplikatorventil (50) eine Multiplikatorventil-Dämpfungseinrichtung (55) aufweist, wobei die Multiplikatorventil-Dämpfungseinrichtung (55) Folgendes aufweist:
- einen Dämpfungskolben (56), der mit der vorderen Wirkfläche (51) des Multiplikatorventils (50) verbunden ist;
- einen Dämpfungsringraum (57) zwischen der vorderen Wirkfläche (51) und dem Dämpfungskolben (56); und
- eine Dämpfungs-Überströmeinrichtung (58), welche mit dem Dämpfungskolben (56) derart zusammenwirkt, dass ein weitgehend ungedämpftes Überströmen von Hydraulikflüssigkeit zwischen dem vorderen Hydraulikkammerbereich (13) und dem Dämpfungsringraum (57) erfolgt, wenn das Multiplikatorventil (50) maximal geöffnet ist und ein gedämpftes Überströmen von Hydraulikflüssigkeit von dem Dämpfungsringraum (57) in den vorderen Hydraulikkammerbereich (13) erfolgt, wenn sich das Multiplikatorventil (50) aus seiner maximalen Öffnungsposition in Richtung seiner Geschlossenposition bewegt,
wobei die Dämpfungs-Überströmeinrichtung (58) ausgelegt ist, während des gedämpften Überströmens von Hydraulikflüssigkeit die Bewegungsgeschwindigkeit des Multiplikatorventils (50) zu dämpfen.

13. Verwendung der Vorrichtung (100) nach einem der Ansprüche 1 bis 12 als regeneratives Energieverzehrelement in einem spurgeführten Fahrzeug, insbesondere Schienenfahrzeug.

14. Spurgeführtes Fahrzeug, insbesondere Schienenfahrzeug, mit einer Vorrichtung (100) nach einem der Ansprüche 1 bis 12.

## Claims

1. A device (100) for damping compressive forces, wherein the device (100) comprises the following:
- a cylinder (10), in particular a circular cylinder, in which a hydraulic chamber (11) is formed;
- a hollow piston (20) telescopically displaceable along a center axis (1) relative to the cylinder (10);
- a valve arrangement (40) formed at an end region of the hollow piston (20) to divide the hydraulic chamber (11) into a rear hydraulic chamber region (12) and a front hydraulic chamber region (13); and
- a separating piston (25) disposed in the hollow piston (20) to be movable along the center axis (1) which separates a head space (21) formed in the hollow piston (20) from the front hydraulic chamber region (13),
wherein the valve arrangement (40) comprises an overflow area (41) connected to the rear hydraulic chamber region (12) and an eccentric hydraulic compartment (43) connected to the overflow area (41) by means of at least one passage (42),
wherein the valve arrangement (40) further comprises an overload valve (60) which is connected to the rear hydraulic chamber region (12) by means of at least one overload passage (62), wherein an overload passage gap (61) enables an overflow of hydraulic fluid from the rear hydraulic chamber region (12) into the front hydraulic chamber region (13) in the open state of the overload valve (60), and
wherein the valve arrangement (40) further comprises an eccentrically arranged multiplier valve (50), wherein the rear effective area (52) of the multiplier valve (50) is in operative hydraulic connection with the eccentric hydraulic compartment (43) and the front effective area (51) of the multiplier valve (50) is in operative hydraulic connection with the front hydraulic chamber region (13) such that hydraulic fluid will flow out of the eccentric hydraulic compartment (43) into the front hydraulic chamber region (13) when the multiplier valve (50) is open,
**characterized in that**
the effective flow cross section of the open multiplier valve (50) is smaller than the effective flow cross section through the overload passage gap (61) of the open overload valve (60).

2. The device (100) according to claim 1,
wherein a throttle pin (30) fixed to the cylinder (10) extends into the connecting area between the rear hydraulic chamber region (12) and the overflow area (41), wherein the throttle pin (30) is formed such that a throttle gap (31) is formed between the throttle pin (30) and the overflow area with its cross section dependent on the depth of penetration of the hollow piston (20) into the cylinder (10).

3. The device (100) according to claim 1 or 2,
wherein the overload valve (60) is pressed into its valve seat by means of a spring (63), preferably an annular spring.

4. The device (100) according to any one of claims 1 to 3,
wherein the minimum force necessary to open the multiplier valve (50) in consequence of the pressure ratio between the pressure in the eccentric hydraulic compartment (43) and the pressure in the front hydraulic chamber region (13) is less than the minimum force necessary to open the overload valve (60), in particular the force applied by the spring (63).

5. The device (100) according to any one of claims 1 to 4,
wherein the valve arrangement (40) further comprises a nonreturn valve (32), in particular a ball valve, wherein said nonreturn valve (32) is arranged such that it enables a return flow of the hydraulic fluid from the front hydraulic chamber region (13) into overflow area (41) and/or into the rear hydraulic chamber region (12) precisely when the pressure in the front hydraulic chamber region (13) is greater than at least one of the pressures in the overflow area (41) or the rear hydraulic chamber region (12).

6. The device (100) according to any one of claims 1 to 5,
wherein the area ratio between the front effective area (51) of the multiplier valve (50) and the rear effective area (52) of the multiplier valve (50) is selected such that a multiple of the pressure, particularly two to eight times the pressure, of the hydraulic fluid in the front hydraulic chamber region (13) needs to prevail in the eccentric annulus (43) to open said multiplier valve.

7. The device (100) according to any one of claims 1 to 6,
wherein the actuating force necessary to open the overload valve (60) is predefinable.

8. The device (100) according to claim 7,
wherein the actuating force necessary to open the overload valve (60) can be widely adapted to the requirements of the respective application without significant constructional modifications.

9. The device (100) according to any one of claims 1 to 8,
wherein the head space (21) is filled with a gas, particularly nitrogen, under positive pressure relative to the ambient pressure.

10. The device (100) according to any one of claims 1 to 9,
wherein the hollow piston (20) comprises at least one hollow piston sealing element (22, 23) designed such that essentially no hydraulic fluid can reach the outer area (24) of the hollow piston (20) not pushed into the cylinder (10) during the sealing displacement of the hollow piston (20) within the cylinder (10).

11. The device (100) according to any one of claims 1 to 10,
wherein the separating piston (25) comprises at least one separating piston sealing element (26) which ensures a leveling off of hydraulic fluid during the sealing displacement of the separating piston (25) within the hollow piston (22) such that essentially no hydraulic fluid can reach the head space (21).

12. The device (100) according to any one of claims 1 to 11,
wherein the multiplier valve (50) comprises a multiplier valve damping mechanism (55), wherein the multiplier valve damping mechanism (55) comprises the following:
- a damping piston (56) connected to the front effective area (51) of the multiplier valve (50);
- a damping annulus (57) between the front effective area (51) and the damping piston (56); and
- a damper overflow mechanism (58) which interacts with the damping piston (56) such that a largely undamped overflow of hydraulic fluid occurs between the front hydraulic chamber region (13) and the damping annulus (57) when the multiplier valve (50) is opened to its maximum and a damped overflow of hydraulic fluid occurs from the damping annulus (57) into the front hydraulic chamber region (13) when the multiplier valve (50) is moved out of its maximum open position toward its closed position,
wherein the damper overflow mechanism (58) is designed to dampen the velocity of the multiplier valve (50) movement during the damped overflow of hydraulic fluid.

13. Use of the device (100) according to any one of claims 1 to 12 as a regenerative energy absorbing element in a track-guided vehicle, in particular a railway vehicle.

14. A track-guided vehicle, in particular a railway vehicle, having a device (100) in accordance with any one of claims 1 to 12.

## Revendications

1. Dispositif (100) pour amortir des forces de compression, ledit dispositif (100) comprenant les éléments suivants :
- un cylindre (10), en particulier un cylindre à base circulaire, dans lequel est réalisée une chambre hydraulique (11) ;
- un piston creux (20) capable de translation par rapport au cylindre (10) de manière télescopique le long d'un axe médian (1) ;
- un agencement de valve (40) réalisé à une zone terminale du piston creux (20) pour subdiviser la chambre hydraulique (11) en une région postérieure (12) de chambre hydraulique et une région antérieure (13) de chambre hydraulique ; et
- un piston séparateur (25) agencé dans le piston creux (20) et déplaçable le long de l'axe médian (1), qui sépare une chambre à gaz (21) formée à l'intérieur du piston creux (20) vis-à-vis de la région antérieure (13) de la chambre hydraulique,
dans lequel l'agencement de valve (40) comprend une zone de déversement (41) reliée à la zone postérieure (12) de la chambre hydraulique, et une chambre hydraulique (43) reliée à la zone de déversement (41) via au moins un canal (42),
dans lequel l'agencement de valve (40) comprend en outre une valve de surcharge (60) qui communique avec la zone postérieure (12) de la chambre hydraulique via au moins un canal de surcharge (62), de sorte que, dans la situation ouverte de la valve de surcharge (60), un intervalle de traversée de surcharge (61) permet un déversement de fluide hydraulique hors de la zone postérieure (12) de la chambre hydraulique vers la zone antérieure (13) de la chambre hydraulique, et
dans lequel l'agencement de valve (40) comprend en outre une valve multiplicatrice (50) agencée de façon excentrique, telle que la surface active postérieure (52) de la valve multiplicatrice (50) est en liaison hydraulique active avec la chambre hydraulique excentrique (43) et que la surface active antérieure (51) de la valve multiplicatrice (50) est en liaison hydraulique active avec la zone antérieure (13) de la chambre hydraulique, de sorte que lorsque la valve multiplicatrice (50) est ouverte, le fluide hydraulique s'écoule hors de la chambre hydraulique excentrique (43) jusque dans la zone antérieure (13) de la chambre hydraulique, **caractérisé en ce que**
la section d'écoulement effective de la valve multiplicatrice ouverte (50) est plus faible que la section d'écoulement effective à travers l'intervalle de traversée de surcharge (61) de la valve de surcharge ouverte (60).

2. Dispositif (100) selon la revendication 1,
dans lequel une pointe d'étranglement (30) fixée sur le cylindre (10) pénètre dans la zone de liaison entre la chambre hydraulique postérieure (12) et la zone de déversement (41), ladite pointe d'étranglement (30) étant conformée de telle manière qu'elle forme, entre la pointe d'étranglement (30) et la zone de déversement, un intervalle d'étranglement dont la section est fonction de la profondeur de pénétration du piston creux (20) dans le cylindre (10).

3. Dispositif (100) selon la revendication 1 ou 2,
dans lequel la valve de surcharge (60) est pressée contre son siège de valve au moyen d'un ressort (63), de préférence un ressort annulaire.

4. Dispositif (100) selon l'une des revendications 1 à 3,
dans lequel la force minimale nécessaire pour ouvrir la valve multiplicatrice (50) est, en raison du rapport de pression entre la pression dans la chambre hydraulique excentrique (43) et la pression dans la zone antérieure (13) de la chambre hydraulique, plus faible que la force minimale nécessaire pour ouvrir la valve de surcharge (60), en particulier que la force appliquée par le ressort (63).

5. Dispositif (100) selon l'une des revendications 1 à 4,
dans lequel l'agencement de valve comprend en outre un clapet antiretour (32), en particulier un clapet à bille, dans lequel le clapet antiretour (32) est agencé de telle façon qu'il permet un reflux du fluide hydraulique hors de la zone antérieure (13) de la chambre hydraulique vers la zone de déversement (41) et/ou dans la zone postérieure (12) de la chambre hydraulique exactement quand la pression dans la zone antérieure (13) de la chambre hydraulique est plus grande que l'une au moins des pressions dans la zone de déversement (41) ou dans la zone postérieure (12) de la chambre hydraulique.

6. Dispositif (100) selon l'une des revendications 1 à 5,
dans lequel le rapport de surface entre la surface active antérieure (51) de la valve multiplicatrice (50) et la surface active postérieure (52) de la valve multiplicatrice (50) est choisi de telle façon que, pour ouvrir la valve multiplicatrice, il faut que la pression régnant dans la chambre annulaire excentrique (43) soit un multiple, en particulier deux fois à huit fois, de la pression du liquide hydraulique dans la zone antérieure (13) de la chambre hydraulique.

7. Dispositif (100) selon l'une des revendications 1 à 6,
dans lequel la force de commutation nécessaire pour ouvrir la valve de surcharge (60) est susceptible d'être préalablement fixée.

8. Dispositif (100) selon la revendication 7,
dans lequel la force de commutation nécessaire pour ouvrir la valve de surcharge (60) est susceptible d'être adaptée, sans modification structurelle notable, dans une large mesure aux exigences de l'application respective.

9. Dispositif (100) selon l'une des revendications 1 à 8,
dans lequel la chambre à gaz (21) est remplie avec un gaz soumis à une surpression par rapport à la pression ambiante, en particulier de l'azote.

10. Dispositif (100) selon l'une des revendications 1 à 9,
dans lequel le piston creux (20) comprend au moins un élément d'étanchement (22, 23) pour piston creux, élément qui est conçu de telle façon que, pendant un déplacement avec étanchement du piston creux (20) à l'intérieur du cylindre (10) sensiblement aucun liquide hydraulique ne parvient dans la région extérieure (24), introduite dans le cylindre (10), du piston creux (20).

11. Dispositif (100) selon l'une des revendications 1 à 10,
dans lequel le piston séparateur (25) comprend au moins un élément d'étanchement (26) pour piston séparateur, élément qui garantit un essuyage du liquide hydraulique pendant le déplacement avec étanchement du piston séparateur (25) à l'intérieur du piston creux (22) de telle sorte que sensiblement aucun liquide hydraulique ne parvient dans la chambre à gaz (21).

12. Dispositif (100) selon l'une des revendications 1 à 11,
dans lequel la valve multiplicatrice (50) comprend un moyen d'amortissement (55) pour valve multiplicatrice, ledit moyen d'amortissement (55) pour valve multiplicatrice comprenant les éléments suivants :
- un piston amortisseur (56) qui est relié à la surface active antérieure (51) de la valve multiplicatrice (50) ;
- une chambre annulaire d'amortissement (57) entre la surface active antérieure (51) et le piston amortisseur (56) ; et
- un moyen de déversement d'amortissement (58), qui coopère avec le piston amortisseur (56) de telle façon qu'il se produit un déversement largement non amorti du liquide hydraulique entre la zone antérieure (13) de la chambre hydraulique et la chambre annulaire d'amortissement (57) quand la valve multiplicatrice est ouverte au maximum, et qu'il se produit un déversement amorti du liquide hydraulique depuis la chambre annulaire d'amortissement (57) vers la zone antérieure (13) de la chambre hydraulique quand la valve multiplicatrice (50) se déplace depuis sa position ouverte maximum en direction de sa position fermée,
dans lequel le moyen de déversement d'amortissement (58) est conçu, pendant le déversement amorti du liquide hydraulique, pour amortir la vitesse de déplacement de la valve multiplicatrice (50).

13. Utilisation du dispositif (100) selon l'une des revendications 1 à 12 à titre d'élément de dégradation d'énergie régénératif dans un véhicule guidé sur voie, en particulier un véhicule sur rail.

14. Véhicule guidé sur voie, en particulier véhicule sur rail, comprenant un dispositif (100) selon l'une des revendications 1 à 12.
